Europäisches Patentamt

European Patent Office

Office européen des brevets

(11) Veröffentlichungsnummer: **0 157 154**
A1

## EUROPÄISCHE PATENTANMELDUNG

(21) Anmeldenummer: **85101969.5**

(51) Int. Cl.⁴: **G 01 H 3/12**, G 10 K 11/30

(22) Anmeldetag: **22.02.85**

(30) Priorität: **17.03.84 DE 3409956**

(43) Veröffentlichungstag der Anmeldung: **09.10.85**
**Patentblatt 85/41**

(84) Benannte Vertragsstaaten: **CH DE FR GB LI NL**

(71) Anmelder: **ERNST LEITZ WETZLAR GMBH,
Ernst-Leitz-Strasse 30 Postfach 20 20,
D-6330 Wetzlar 1 (DE)**

(72) Erfinder: **Dransfeld, Klaus, Prof. Dr., Immenstall,
CH-8722 Ermatingen (CH)**

(54) **Akustische Linsenanordnung.**

(57) Akustische Linsenanordnung mit einer aus mehreren Flächenelementen bestehenden aktiven Elektrode eines piezoelektrischen Wandlers (11) auf einer Seite eines akustischen Übertragers (10) und einer sphärischen Linsenfläche (12) auf der dem Wandler gegenüberliegenden Seite des Übertragers. Die Flächenelemente der aktiven Elektrode sind als einander paarweise zentralsymmetrisch gegenüberliegende Segmente (14, 15, 16, 17) einer Kreisfläche ausgebildet. Die Segmentpaare sind jeweils elektrisch miteinander verbunden (19, 20), wobei ein Segmentpaar (14, 15) als akustischer Sender und mindestens ein weiteres Segmentpaar (16, 17) als akustischer Empfänger vorgesehen ist. Die Anordnung is insbesondere zur akusto-mikroskopischen Untersuchung der den Ultraschall depolarisierenden Eigenschaften einer Probe (23) geeignet.

## Akustische Linsenanordnung

Die Erfindung betrifft eine akustische Linsenanordnung mit einer aus mehreren Flächenelementen bestehenden aktiven Elektrode eines piezoelektrischen Wandlers auf einer Seite eines akustischen Übertragers und einer sphärischen Linsenfläche auf der dem Wandler gegenüberliegenden Seite des Übertragers.

Akustische Linsenanordnungen dieser Art stellen ein wesentliches Bauteil für akustische Mikroskope dar. Sie enthalten üblicherweise Wandler mit einem einzigen Flächenelement als aktiver Elektrode. Es sind jedoch auch schon Anordnungen bekanntgeworden, bei denen die aktive Elektrode aus mehreren konzentrischen Ringflächen besteht, die um eine zentrale Kreisfläche herum angeordnet sind. Eine solche, in Appl. Phys. Lett. **37** (3), 1. August 1980, pp. 272-274, beschriebene Anordnung stellt eine akustische Zonenplatte dar, mit der bei geeigneter Erregung der einzelnen Fresnelschen Zonenflächen die Apertur der akustischen Linsenanordnung variiert werden kann.

In Appl. Phys. Lett. $\underline{42}$ (5), 1. März 1983, pp. 413-415, wird eine akustische Linsenanordnung beschrieben, bei der die aktive Elektrode aus zwei Halbkreisflächen besteht. Die eine Halbfläche dient als Eingngswandler, die andere als Ausgangswandler. Es wird damit eine Reflektionslinsenanordnung mit definierter Richtungswirkung der auf die Objektfläche auftreffenden Ultraschallstrahlen geschaffen. Die Sende- und die Empfängeranordnung sind elektrisch voneinander getrennt.

Ein Teil der durch die eine Linsenhälfte auf die Objektfläche gerichteten Ultraschallstrahlen wird an dieser spiegelnd reflektiert und durch die andere Linsenhälfte aufgenommen. Ein anderer Teil der Strahlen regt in der Oberfläche sog. Rayleigh-Wellen an, die sich in der Einstrahlungsrichtung ausbreiten. Ein Teil der Oberflächenwellen tritt aus der Objektoberfläche aus und wird dann ebenfalls von der anderen Linsenhälfte aufgenommen. Die beiden Ultraschallstrahlenanteile haben gegeneinander eine Phasenverschiebung, so daß sie miteinander interferieren und auf der Empfängerelektrode ein entsprechendes Signal erzeugen. Das Signal V wird für unterschiedliche Fokuslagen z der akustischen Linsenanordnung relativ zur Objektoberfläche aufgenommen (V(z)-Messung).

Die für das Interferenzsignal entscheidende Phasenverschiebung hängt von den an der beschallten Objektfläche vorliegenden Materialeigenschaften der Probe ab, da diese die Ausbreitungsgeschwindigkeit der Oberflächenwelle bestimmen. Eine V(z)-Messung gibt daher Auskunft über die in Richtung der Oberflächenwellenausbreitung vorliegenden elastischen Parameter in der Probe. Die Ausbreitungsrichtung verläuft bei der beschriebenen Linsenanordnung senkrecht zur Trennlinie für die Sender- und Empfänger-Elektrode.

Durch Drehung der Objektfläche relativ zur Ausbreitungsrichtung der Oberflächenwelle lassen sich Anisotropien der elastischen Parameter feststellen.

Eine andere Anordnung zur Bestimmung von Anisotropien der elastischen Parameter wird in der DE-OS 32 25 586 angegeben. Mit Hilfe einer zylindrisch geformten Linsenfläche wird ein linear fokussiertes akustisches Strahlenbündel erzeugt. Der piezoelektrische Wandler ist einflächig und wird abwechselnd zum Aussenden und Empfangen der Ultraschallstrahlen verwendet. Anisotropien können bei Drehung der Objektfläche nur in Bezug auf die Richtung der Fokuslinie festgestellt werden. Die V(z)-Kurven sind repräsentativ für das integrale Verhalten aller auf der Fokuslinie liegenden Objektpunkte.

Durch Anordnung mehrerer Zylinderlinsenflächen mit unterschiedlicher Orientierung zueinander in einer einzigen Linsenanordnung, wobei jeder Linsenfläche ein eigener piezoelektrischer Wandler zugeordnet ist, kann die genannte Anisotropie ohne mechanische Drehung des Objektes bestimmt werden. Zu beachten ist jedoch, daß die verteilten Fokuslinien einen anderen Objektbereich

0157154

überdecken als eine einzelne Fokuslinie bei Drehung des Objekts.

Ein Vergleich aller bisher bekannten Untersuchungsmethoden der akustischen Reflektionsmikroskopie und der für sie entwickelten Modellvorstellungen über den geometrischen Verlauf der Ultraschallstrahlen ergibt, daß nur die akustischen Strahlen ausgewertet wurden, die den geometrischen Reflektionsgesetzen gehorchen.

Der Erfindung lag die Aufgabe zugrunde, eine akustische Linsenanordnung anzugeben, mit der die Untersuchung auch solcher Objektparameter möglich ist, die die akustischen Strahlen in von der eingestrahlten Ausbreitungsrichtung abweichende Richtungen lenken. Die akustomikroskopische Fragestellung soll ferner insbesondere auch auf Ultraschall depolarisierende Effekte bei der Wechselwirkung der Ultraschallwellen mit den Untersuchungsobjekten ausgedehnt werden können.

Diese Aufgabe wird bei einer akustischen Linsenanordnung der eingangs genannten Art erfindungsgemäß durch die kennzeichnenden Merkmale des Anspruchs 1 gelöst. Eine vorteilhafte Verwendungsmöglichkeit der Linsenanordnung ist im Anspruch 2 angegeben.

Ein Ausführungsbeispiel für die erfindungsgemäße Linsenanordnung ist in der Zeichnung schematisch dargestellt und wird nachfolgend beschrieben.

Im einzelnen zeigen die Figuren:

Fig. 1     einen Schnitt durch eine akustische Linsenanordnung

Fig. 2     eine Aufsicht auf den piezoelektrischen
           Wandler.

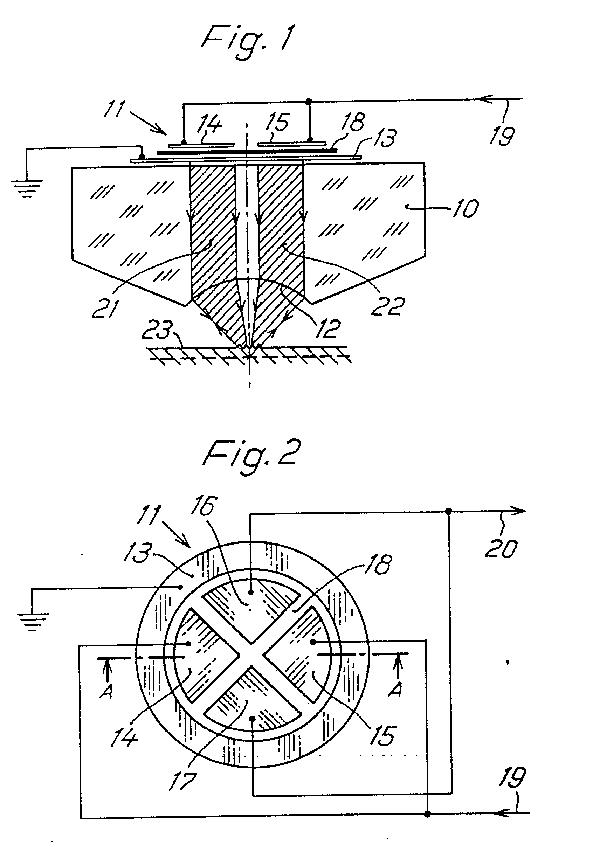

Die in Fig. 1 dargestellte akustische Linsenanordnung
besteht aus einem akustischen Übertrager 10, auf dessen oberer, planen Fläche ein piezoelektrischer Wandler 11 angebracht ist und in dessen dem Wandler gegenüberliegender Fläche eine sphärische Linsenfläche 12
eingearbeitet ist. Der Wandler 11 weist eine untere
Elektrode 13 auf, die mit dem Massepotential verbunden
ist, und obere Elektroden 14,15,16,17, die als aktive
Elektroden bezeichnet werden. Zwischen der unteren und
den oberen Elektroden befindet sich eine piezoelektrische Schicht 18, die z.B. aus Zinkoxid (ZnO) besteht.
Ein zwischen der unteren und den oberen Elektroden anliegendes elektrisches Feld wird durch die Schicht 18
in ein Ultraschallfeld umgewandelt und umgekehrt.

Die Anordnung der Elektroden 14,15,16,17 ergibt sich
aus Fig. 2, in der mit A-A die in Fig. 1 verwendete
Schnittlinie bezeichnet ist. Die einzelnen Elektroden
sind als Kreissegmente ausgebildet, so daß ihre Gesamtfläche sich an die sphärische Linsenfläche 12 anpaßt.
Jeweils zwei einander gegenüberliegende Segmente 14,15;
16,17 sind elektrisch an den Leitungen 19,20 zusammengefaßt.

Wenn an die Leitung 19 ein elektrisches Anregungssignal gelegt wird, werden in den Flächenbereichen 14,15 Ultraschallwellen erzeugt, die sich als Ultraschall-Strahlenbündel 21,22 in dem Übertrager 10 ausbreiten und durch die Linsenfläche 12 auf ein Objekt 23 fokussiert werden. Der Ultraschallfokus liegt in dem dargestellten Beispiel (Fig. 1) innerhalb des Objekts, so daß sich in der Objektoberfläche Oberflächenwellen ausbreiten können. Aufgrund der Formgebung für die Elektroden 14,15 werden die Oberflächenwellen in Form eines schmalen Bandes in Richtung der Schnittlinie verlaufen. Man kann diese Richtung als Polarisationsrichtung des eingestrahlten Ultraschallstrahlenbündels bezeichnen.

Ein an der Leitung 20 entstehendes Meßsignal zeigt an, daß die Objektoberfläche Strukturparameter enthält, die entweder die linearen Oberflächenwellen depolarisieren oder aber die Ausbreitungsrichtung der primären Welle verändern. Im ersten Fall ist bei vollständiger Depolarisation zu erwarten, daß in dem gesamten Aperturbereich der Linse 12 eine annähernde Gleichverteilung der zurückreflektierten Ultraschallstrahlen vorliegt. Verwendet man daher zur Überprüfung ein gepulstes Anregungssignal und benutzt abwechselnd auch die Wandlerflächen 14,15 als Empfänger, so werden an den Leitungen 19 und 20 Signale gleicher Größenordnung entstehen. Im zweiten Fall ist bei starker Drehung der Ausbreitungsrichtung überwiegend an den Empfängerelektroden 16,17 ein ausgeprägtes Signal zu erwarten.

0157154

Wegen der Trennung zwischen den Anregungs- und den Empfängerelektroden kann in beiden Fällen auch mit einer kontinuierlichen Anregung gearbeitet werden, wodurch die Signalverarbeitung wesentlich vereinfacht wird.

Selbstverständlich liegt es auch im Rahmen des offenbarten Erfindungsgedankens, die Anzahl der Segmentpaare zu erhöhen. Ferner kann beispielsweise auch das Segmentpaar für die Anregungselektroden eine andere Flächengröße aufweisen als die Segmentpaare für die Empfängerelektroden. Es ist auch möglich, mehrere Empfängerpaare wahlweise zusammenzuschalten.

Ansprüche

1. Akustische Linsenanordnung mit einer aus mehreren Flächenelementen bestehenden aktiven Elektrode eines piezoelektrischen Wandlers (11) auf einer Seite eines akustischen Übertragers (10) und einer sphärischen Linsenfläche (12) auf der dem Wandler gegenüberliegenden Seite des Übertragers, d a d u r c h g e k e n n z e i c h n e t , daß die Flächenelemente als einander paarweise zentralsymmetrisch gegenüberliegende Segmente (14,15,16,17) einer Kreisfläche ausgebildet sind und die Segmentpaare jeweils elektrisch miteinander verbunden sind (19,20), wobei ein Segmentpaar (14,15) als akustischer Sender und mindestens ein weiteres Segmentpaar (16,17) als akustischer Empfänger vorgesehen ist.

2. Verwendung einer akustischen Linsenanordnung nach Anspruch 1 zur akusto-mikroskopischen Untersuchung der elastischen Anisotropie und der den Ultraschall depolarisierenden Eigenschaften einer Probe (23).

*Fig. 1*

*Fig. 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 302 718 (DREWES) * Seite 10, Zeilen 14-26; Figur 2 * | 1 | G 01 H  3/12 G 10 K  11/30 |
| Y | | 2 | |
| | --- | | |
| Y,D | DE-A-3 225 586 (CHUBACHI et al.) * Seite 11, Absatz 2; Seite 14, Zeile 2 - Seite 15, Zeile 11; Figur 8 * | 2 | |
| A,D | | 1 | |
| | --- | | |
| A,D | APPLIED PHYSICS LETTERS, Band 42, Nr. 5, 1. März 1983, Seiten 413-415, New York, US; J.A. HILDEBRAND et al.: "Directional acoustic microscopy for observation of elastic anisotropy" | 1 | |
| | | | **RECHERCHIERTE SACHGEBIETE (Int. Cl.4)** G 01 H G 10 K G 01 N G 01 S |
| | --- | | |
| A,D | APPLIED PHYSICS LETTERS, Band 37, Nr. 3, 1. August 1980, Seiten 272-274, New York, US; R.D. HEIDENREICH: "Acoustic-zone-plate variable-illuminating-angle system for acoustic microscopes" | 1,2 | |
| | ----- | | |

Der vorliegende Recherchenbericht wurde für alle Patentansprüche erstellt.

| Recherchenort DEN HAAG | Abschlußdatum der Recherche 04-06-1985 | Prüfer ANDERSON A.TH. |
|---|---|---|